# EUROPÄISCHE PATENTSCHRIFT

(11) **EP 2 162 581 B1**
(45) Veröffentlichungstag und Bekanntmachung des Hinweises auf die Patenterteilung: **29.05.2013**
(21) Anmeldenummer: 08759321.6
(22) Anmeldetag: 23.06.2008
(51) Int. Cl.: D06M 11/38, D06M 11/40, D06M 11/71, D06M 11/76, D06B 7/08, C08J 5/04, D21C 3/02, D21C 5/00, C08L 97/02, D01C 1/02, C08H 8/00, C08J 5/06

(54) **HOCHFESTES FASERMATERIAL AUS NATURFASER, VERFAHREN ZU SEINER HERSTELLUNG UND SEINE VERWENDUNG ZUR HERSTELLUNG VON VERBUNDWERKSTOFFEN**
HIGH-STRENGTH FIBROUS MATERIAL CONSISTING OF NATURAL FIBRES, METHOD FOR THE PRODUCTION THEREOF, AND USE OF SAME FOR PRODUCING COMPOSITE MATERIALS
MATÉRIAU FIBREUX À RIGIDITÉ ÉLEVÉE À BASE DE FIBRES NATURELLES, SON PROCÉDÉ DE PRODUCTION ET SON UTILISATION POUR LA PRODUCTION DE MATÉRIAUX COMPOSITES

(30) Priorität: 02.07.2007 DE 102007030576
(43) Veröffentlichungstag der Anmeldung: 17.03.2010
(73) Patentinhaber: Flasin GmbH, 21629 Neu Wulmstorf (DE)
(72) Erfinder: COSTARD, Herbert, 21629 Neu Wulmstorf (DE)
(74) Vertreter: UEXKÜLL & STOLBERG
(86) Internationale Anmeldenummer: PCT/EP2008/005060
(87) Internationale Veröffentlichungsnummer: WO 2009/003606

(56) Entgegenhaltungen:
- EP-A- 0 378 800
- DE-A1- 3 221 096

## Beschreibung

Die Erfindung betrifft hochfeste Fasermaterialien, die aus pflanzlichen Naturfasern hergestellt werden können. Ferner betrifft sie ein Verfahren zur Herstellung dieser hochfesten Fasermaterialien und ihre Verwendung zur Herstellung von Verbundwerkstoffen.

Insbesondere betrifft die Erfindung ein chemisches Aufschlussverfahren, bei dem die Naturfasern der Einwirkung von Alkalien ausgesetzt werden.

Konventionell kommen heute häufig alkalische Aufschlussverfahren unter Einsatz von Natronlauge zur Anwendung. Hierzu gehören das Beuchen (Abkochen), Beuchen und Bleichen, Mercerisieren, Slackmercerisieren und das Laugieren (siehe M. Peter und H. K. Rouette, Grundlagen der Textilveredlung, 1989, Deutscher Fachverlag Gmbh, Frankfurt am Main).

Mit den heute häufig angewendeten Verfahren der alkalischen Beuche und Bleiche (NaOH und beispielsweise H₂O₂ als Bleichmittel) werden die Festigkeiten und Abriebwerte der Rohfasern reduziert. Dies trifft insbesondere auf Samen- und Bastfasern, inbesondere cellulosische Fasern zu, wie beispielsweise Lintersfasern, Baumwollfasern und Bastfasern, insbesondere Sklerenchymfasern. Die Beuch- und Bleichtemperatur liegt üblicherweise im Bereich von 110 bis 140°C.

Eine Sonderstellung nehmen die Verfahren ein, bei denen zur Beseitigung der pflanzlichen Begleitstoffe wie beispielsweise der Pektine in der Regel Enzyme zum Einsatz kommen.

Eine andere Methode unter Verwendung von Trinatriumphosphat in Kombination mit einer Borax-Vorbehandlung wird in der EP 0 861 347 Bl beschrieben. Dieses Verfahren läßt einen schonenden Aufschluß bzw. eine schonende Bleiche zu. Eine Umstrukturierung der Fibrillen wie bei dem weiter unten beschriebenen Mercerisierungsprozess findet hierbei jedoch nicht statt.

Eine Verbesserung der Festigkeiten und anderer Eigenschaften der Fasern erzielt man durch die Verfahren der Mercerisierung, der Slackmercerisation und des Laugierens. Bei allen drei Verfahren erfolgt im Prinzip eine Umwandlung cellulosischer Fasern in eine sogenannte "Cellulose II", die durch den Einsatz hochkonzentrierter Natronlaugebäder 28 bis 32 °Be' (270 bis 330 g/l NaOH) im Bereich von 10 bis 20 °C über mehrere Stunden erreicht wird.

Unter Cellulose II wird eine Faser verstanden, bei der die Fibrillen dauerhaft in Richtung der Faserachse ausgerichtet sind, wobei jedoch das Auswaschen und die Trocknung der Fasern bisher unter mechanischer Spannung erfolgen muss. Aufgrund der erzielten Anbindungskräfte der Fibrillen in der durch die Streckspannung erzwungenen Parallellage entstehen hochfeste Fasern. Die erhaltenen Fasern zeichnen sich auch durch Glanz und gute Färbeeigenschaften aus.

Eine Sonderstellung bei der Mercerisierung, u.a. das englische Prograde-Verfahren der Fa. Coats, nehmen die Ammoniakverfahren ein. Es erfolgt eine Vorbehandlung der Fasern mit flüssigem Ammoniak. Der Mercerisierungsgrad bei diesen Verfahren ist jedoch beschränkt.

Bei allen bekannten Mercerisierungsverfahren muss eine gesonderte, vorhergehende oder nachträgliche Bleiche erfolgen, wenn Bleiche aufgrund der späteren Anwendung gewünscht ist.

Die der Erfindung zugrunde liegende Aufgabe besteht darin, die bekannten Faseraufschlussverfahren dahingehend zu verbessern, dass ein rentables und umweltschonendes Verfahren bereitgestellt wird, wobei das hergestellte Fasermaterial hohen mechanischen Anforderungen genügen soll.

Diese Aufgabe wird erfindungsgemäß durch ein Verfahren zur Herstellung eines Fasermaterial gelöst, bei dem ein Naturfasermaterial alkalisch aufgeschlossen wird und das dadurch gekennzeichnet ist, dass das Naturfasermaterial ohne Anwendung mechanischer Spannung mit alkalischem Material bei einer Konzentration von 5 bis 13 g/l a) 10 Minuten bis 3 Stunden lang bei einer Temperatur von 5 bis 30°C und anschließend b) 20 Minuten bis 1,5 Stunden lang bei einer Temperatur von 80 bis 150°C behandelt und gegebenenfalls ausgewaschen und/oder getrocknet wird.

Das erfindungsgemäße Fasermaterial zeichnet sich durch hohe Festigkeit und geringen Abrieb aus.

Das erfindungsgemäße Fasermaterial kann auch zur Herstellung von Verbundwerkstoffen verwendet werden, denen es dann seine vorteilhaften Eigenschaften vermittelt.

Bevorzugte Ausführungsformen sind Gegenstand der Unteransprüche.

Das erfindungsgemäß eingesetzte Naturfaserausgangsmaterial ist vorzugsweise aus a) Samenfasern, insbesondere Linters, Baumwolle, Kapok und Pappelflaum, b) Bastfasern, insbesondere Sklerenchymfasern, Bambusfasern, (Brenn)nessel, Hanf, Jute, Leinen bzw. Flachs, und Ramie, c) Hartfasern, insbesondere Sisal, Kenaf und Manila, d) Kokosfasern, und e) Gräsern ausgewählt. Bevorzugte Naturfasern sind cellulosische Fasern, insbesondere Linters, Baumwolle, Bastfasern und Sklerenchymfasern, bevorzugt Flachs bzw. Leinen, Hanf, Nessel, Ramie, Kenaf und Jute, wobei Flachs bzw. Leinen oder Hanf besonders bevorzugt sind.

Bei den erfindungsgemäß eingesetzten Naturfasern handelt es sich um cellulosische Pflanzenfasern, die sich im Anschluß an die alkalische Behandlung durch ausgezeichnete Festigkeit und ausgezeichnetes Abriebverhalten auszeichnen.

Unter cellulosischen Pflanzenfasern sind hier insbesondere solche Fasern zu verstehen, die vorwiegend in der Textilindustrie für Bekleidung, hygienische und medizinische Artikel, als Garne, Gewebe, Gestricke, Gelege oder Vliese, und neuerdings auch bei der Herstellung von Naturfaserverbundwerkstoffen eingesetzt werden. Dazu gehören u.a. Linters, Baumwolle, Bastfasern und Sklerenchymfasern jeglicher Art, wie Flachs bzw. Leinen, Hanf, Nessel, Ramie, Kenaf, Jute u.a.

Die einleitend genannten, speziellen und aufwendigen Mercerisierungsverfahren werden herkömmlicherweise fast ausschließlich auf Baumwolle angewendet. Beispielsweise konnte man aber bei Flachs bzw. Leinen bisher keine wesentliche Umwandlung in eine Cellulose II-Form erzielen. Hinzu kommt, dass die bekannten Verfahren sehr kostenaufwendig sind und sich damit nur für spezielle Anwendungen eignen.

Erfindungsgemäß wurde somit ein kostengünstiges und umweltschonendes Verfahren (ein alkalisches Kalt-Heiß-Verfahren) des Faseraufschlusses in Wasser entwickelt, das die Gewinnung von hochfesten Fasermaterialien, einschließlich Flachs bzw. Leinen, mit einer Faserstruktur gleich oder ähnlich der Cellulose II ermöglicht. Die gewonnenen Fasermaterialien weisen eine hohe Festigkeit auf.

Das erfindungsgemäße Fasermaterial hat ferner insbesondere einen hohen Reinheitsgrad, einen hohen Weißgrad, eine gute Anfärbbarkeit, eine gute Anbindung an das Polymer bei Verbundwerkstoffen, eine reduzierte Quellung und Wasseraufnahme vor allem bei Verbundwerkstoffen, für textile Anwendung einen hohen Glanz, angenehme Trageeigenschaften bei textiler Anwendung (weiche, schmiegsame Faser), und/oder eine gute Verspinnbarkeit in allen üblichen Spinnverfahren, wie beispielsweise OE-Verfahren, Ringspinnverfahren in Lang- und Kurzstapel- und Naßspinnverfahren.

Die eingesetzten alkalischen Materialien sind insbesondere Alkalimetallhydroxid, insbesondere Natriumhydroxid oder Kaliumhydroxid, Alkalimetalcarbonate, insbesondere Natriumcarbonat oder Kaliumcarbonat, oder Alkalimetallphosphate, insbesondere Trinatriumphosphat oder Trikaliumphosphat, wobei Natriumhydroxid bzw. Natronlauge und Trinatriumphosphat bevorzugt sind. Bei Verwendung von insbesondere Trinatriumphosphat geht der oft hohe Erdalkalianteil wie bei Pektinen in oder an den Pflanzenfasern in Lösung.

Es hat sich gezeigt, dass die Faserquellung und damit die Ausrichtung der Fibrillen in Richtung der Faserachse vorzugsweise bei einem pH-Wert von etwa 8 bis 14, vorzugsweise 10 bis 14, bevorzugter 11 bis 12 im kalten Prozeß (Schritt a)) und vorzugsweise bei einer Temperatur von 10 bis 30° C, bevorzugt 10 bis 25 °C, insbesondere 15 bis 25 °C, bevorzugter 15 bis 20 °C stattfindet.

Die kalte Behandlung gemäß Schritt a) erfolgt dabei über einen Zeitraum von 10 Minuten bis 3 Stunden, insbesondere 15 Minuten bis 2 Stunden und bevorzugt 30 Minuten bis 1 Stunde.

Die Heißbehandlung des eingesetzten Naturfasermaterials gemäß Schritt b) erfolgt ebenfalls vorzugsweise bei einem pH-Wert von 8 bis 14, vorzugsweise 10 bis 14, bevorzugter 11 bis 12, und vorzugsweise bei einer Temperatur von 80 bis 140 °C, bevorzugt 85 bis 140 °C, insbesondere 90 bis 135 °C, bevorzugter 100 bis 135 °C.

Die Heißbehandlung gemäß Schritt b) erfolgt dabei über einen Zeitraum von 20 Minuten bis 1,5 Stunden, insbesondere 30 Minuten bis 1 Stunde und bevorzugt 45 Minuten bis 1 Stunde.

Die Konzentration an alkalischem Material in Wasser bei den Schritten a) und/oder b) liegt, bezogen auf den Wirkstoff (typischerweise ein Feststoff), im Bereich von 5 bis 15 g/l, insbesondere 7 bis 13 g/l, bevorzugt 8 bis 12 g/l, besonders bevorzugt bei etwa 10 g/l.

Der Quellprozeß und damit die Fibrillenausrichtung zur Faserachse gemäß Schritt a) wird somit erfindungsgemäß durch eine darauf folgende alkalische Heißbehandlung als Beuche und/oder Bleiche gemäß Schritt b) fixiert.

Die erfindungsgemäße alkalische Behandlung kann durch Zugabe von Hilfsstoffen unterstützt werden. Hier eignen sich Dispergiermittel, Komplexbildner, Sequestriermittel und/oder Tenside. Wasserglas und Schaumunterdrücker sind ebenfalls je nach Endanwendung gegebenfalls zusätzlich einsetzbar. Auch andere übliche Hilfsstoffe können zugesetzt werden. Die Zugabe eines Komplexbildners, Dispergiermittels und/oder Tensids in die Bäder kann die Netzung der Fasern beschleunigen und intensivieren. Hier sind die jeweils üblicherweise für diese Zwecke bei der Faserbehandlung eingesetzten Materialien geeignet.

Als Komplexbildener eignet sich insbesondere beispielsweise ein tensidfreier Komplexbildner. Ein Handelsprodukt dieser Art ist Securon^{®} 540 der Fa. Cognis. Als Tensid eignet sich neben anionischen und kationischen Tensiden beispielsweise insbesondere auch ein nichtionisches Tensid wie ein Alkylpolyalkylenglycolether. Ein Handelsprodukt dieser Art ist Foryl^{®} JA der Fa. Cognis. Ein weiteres geeignetes Hilfsmittel ist beispielsweise auch ein Entlüftungs- und Netzmittel, z.B. auf Basis einer Phosphorverbindung. Ein Handelsprodukt dieser Art ist Arbyl^{®} SFR der Fa. Cognis.

Die Komplexbildner, Dispergiermittel und/oder Tenside und/oder Entlüftungsmittel werden, falls verwendet, bezogen auf Wirkstoff in dem jeweiligen Behandlungsbad, vorzugsweise in einer Konzentration von jeweils 0,1 bis 10 g/l, insbesondere 0,5 bis 5 g/l, bevorzugter 0,5 bis 3 g/l eingesetzt.

Die weiteren einsetzbaren konventionellen Hilfsstoffe werden in ihren jeweils üblicherweise verwendeten Konzentrationen angewendet.

Im Anschluß an das kombinierte Kalt-Heiß-Aufschließen wird das Fasermaterial, gegebenenfalls auch mehrfach, mit Wasser gespült. Je nach Anwendungsart werden an den Spülprozess besondere Anforderungen gestellt. Am höchsten sind die Anforderungen an medizinische Produkte wie medizinische Watte beispielsweise in Bezug auf Restschaumbildung und pH-Wert. Diesbezüglich wird auf das Deutsche Arzneibuch (DAB), z.B. Ausgabe 1992, verwiesen. Das Spülen kann ein mehrstufiger Prozess sein, bei dem einzelne Schritte auch wiederholt werden können.

Durch ein gegebenenfalls erfolgendes anschließendes Trocknen kann auch die Restfeuchte eingestellt werden.

Das so gewonnene erfindungsgemäße Fasermaterial zeigt die gleichen Eigenschaften wie Fasern nach einer Behandlung gemäß einem der eingangs beschriebenen Mercerisierungsverfahren, mit der Besonderheit, dass die Fasern beim Spülen und/oder Trocknen nicht im gestreckten Zustand gehalten werden müssen, um die gestreckte Fibrillenstruktur und damit die Faserfestigkeit und den Glanz der Fasern zu erhalten bzw. zu erzeugen.

Das erfindungsgemäße Fasermaterial weist einen hohen Anteil an OH-Gruppen an der Oberfläche auf, die die Haftung der Fasern untereinander fördern, insbesondere bei Verbundwerkstoffen die Haftung der Fasern an der bzw. den weiteren Komponente(n) (Faser-Matrix-Haftung) fördern, die Herstellung von Faserhalbzeugen für Verbundwerkstoffe ohne Bindemittel ermöglichen und bei textilen Färbeprozessen die Farbstoffanbindung verbessern.

Weiterhin zeichnet sich das erfindungsgemäße Fasermaterial durch Weichheit und gute Anfärbbarkeit aus.

Bei Verbundwerksoffen, die unter Verwendung des erfindungsgemäßen Fasermaterials hergestellt wurden, wird die Quellung und Wasseraufnahme reduziert, und ein beispielsweise als Komponente des Verbundwerkstoffs verwendetes Polymer kann bis in die Struktur der Fasern eindringen. Solche Verbundwerkstoffe können auch Flammschutzmittel und weitere übliche Zusatzstoffe enthalten.

Die Festigkeiten (E-Modul) liegen beispielsweise bei erfindungsgemäß behandeltem Leinen gegenüber einem nach dem Verfahren gemäß der EP 0 861 347 Bl behandelten Leinen um ca. 60% höher.

Der E-Modul wird gemäß dem Verfahren DIN EN ISO 5079 in N/mm² bestimmt, wobei die Einzelfaser sandwichartig zwischen zwei Deckfolien eingebettet wird, die der Halterung der Faser im Meßgerät dienen. Als Meßgerät wurde das Diastron mit einer ALS 1260 Plattform und einer FDAS 765 Laserscaneinheit verwendet.

Der Abrieb wird gemäß dem Verfahren Martindale DIN/EN/ISO 12947-2 bestimmt.

Andere und zusätzliche Effekte ergeben sich insbesondere bei der Beuche und Bleiche von Baumwolle.

Die negative Pilling-Bildung (Pillingverhalten bestimmt gemäß DIN/EN/ISO 12947-2) wird weitgehend vermieden, und um die Spinnfähigkeit der Baumwollfasern zu erhalten, ist keine Anwendung von Spinnavivage notwendig. Die Fasereigenschaften in Bezug auf das Spinnverhalten haben sich nicht negativ verändert.

Das erfindungsgemäße Fasermaterial weist vorteilhafterweise insbesondere eine durchschnittliche Festigkeit (E-Modul) von 8 000 bis 60 000 N/mm2, insbesondere 8 000 bis 60 000, bevorzugt 8 000 bis 50 000, bevorzugter 8 000 bis 40 000, noch bevorzugter 8 000 bis 20 000 und spezieller 8 000 bis 15 000 N/mm² auf.

Ferner ist das erfindungsgemäße Fasermaterial insbesondere dadurch ausgezeichnet, dass es einen Abrieb I (Pilling), gemessen gemäß DIN/EN/ISO 12947-2, von 4 bis 8, insbesondere 4 bis 6, bevorzugt 4 bis 5, und/oder einen Abrieb II (Verschleiß), gemessen gemäß DIN/EN/ISO 12947-2, von 4 bis 8, insbesondere 4 bis 6, bevorzugt 4 bis 5 aufweist. Diese Werte werden bei Anwendung von 60 000 Scheuertouren erreicht.

Das erfindungsgemäße Verfahren eignet sich insbesondere für alle Bast- und Sklerenchymfasern sowie für Samen oder Blütenfasern wie Baumwolle.

Falls es aufgrund der beabsichtigten Endanwendung gewünscht ist oder notwendig sein sollte, kann gegebenfalls gleichzeitig mit dem alkalischen Aufschließen gebleicht werden. Hierdurch ist sogar vorteilhafterweise aufgrund der verbesserten Verfahrensökonomie ein Zeit- und Kostenvorteil möglich. Als Bleichmittel eignen sich insbesondere H₂O₂, z.B. in Form einer 35%igen oder 50%igen wässrigen Lösung. Es sind aber auch andere Bleichmittel geeignet, die üblicherweise zur Faserbleichung eingesetzt werden, z.B. Chlor- oder Ozonbleichen.

Das Bleichmittel, z.B. eine Wasserstoffperoxidlösung, ist in dem Behandlungsbad, falls vorhanden, vorzugsweise in einer Menge von 0,1 bis 15 g/l, insbesondere 1 bis 10 g/l und bevorzugt 5 bis 10 g/l zugegen. Die Mengenangaben sind hierbei auf 50%ige Wasserstoffperoxidlösung bezogen.

Die Naturfasern können erfindungsgemäß insbesondere als Flocke, Kammzug, Vlies oder ähnlich, aber auch als Garn oder Gewebe eingesetzt werden.

Vorzugsweise ist das Fasermaterial für technische Zwecke, wie in Verbundwerkstoffen, aber auch für textile, hygienische und medizinische Zwecke einsetztbar.

Die Erfindung wird durch die folgenden Beipiele weiter erläutert.

Die Ausführung der Beispiele erfolgte auf einem Bleichapparat LFA XD der Fa. Thies GmbH & Co KG, Coesfeld.

### Beispiel 1

Leinen Kammzüge bleichen - Natronlaugeverfahren Packdichte 250 g/l
1. kalt naß packen bei 20 °C
2. 60 Minuten kalt, NaOH 10 g/l 100%,
   Komplexbildner Securon 540 1,5 g/l,
3. ablassen ohne spülen
4. Bleiche Start 45 °C, 30 Minuten 110 °C,
   NaOH 10 g/l 100%,
   Komplexbildner Securon 540 1,5 g/l,
   Wasserstoffperoxid 9 g/l 50%,
   Stabilisator Stabilol HN 1,0 g/l,
5. ablassen ohne spülen
6. Stufe 4. wiederholen
7. ablassen und 2x warm spülen bei 50 °C
8. ablassen und 2x kalt spülen bei 18 °C
9. ablassen und abdrücken
10. auf Siebbandtrockner mit 130 °C auf 14% Restfeuchte trocknen
durchschnittl. Faserfestigkeit E-Modul 12487 N/mm² Weißgrad ISO 88, nach DIN EN ISO 2470

Ein entsprechend dem Verfahren von Beispiel 1 der EP 0 861 347 B1 hergestelltes Vergleichsprodukt besaß eine durchschnittl. Faserfestigkeit E-Modul von 7730 N/mm².

### Beispiel 2

Leinen Flocke bleichen - Trinatriumphosphatverfahren Na₃PO₄ Packdichte 350 g/l
1. kalt naß packen bei 20 °C
2. 60 Minuten kalt, Na₃PO₄ 8 g/l,
   Komplexbildner Securon 540 1,5 g/l,
2. ablassen ohne spülen,
3. Beuche Start 45 °C, 30 Minuten 110 °C,
   Na₃PO₄ 8 g/l,
   Komplexbildner Securon 540 1,5 g/l,
4. ablassen ohne spülen,
5. Bleiche Start 45 °C, 30 Minuten 110 °C,
   Na₃PO₄ 8 g/l,
   Komplexbildner Securon 540 1,5 g/l,
   Wasserstoffperoxid 9 g/l 50%,
   Stabilisator Stabilol HN 1,0 g/l,
7. ablassen und 2x warm spülen bei 50 °C
8. ablassen und 2x kalt spülen bei 18 °C
9. ablassen und abdrücken
10. auf Siebbandtrockner mit 130 °C trocknen auf 12% Restfeuchte

Faserfestigkeit E-Modul 12597 N/mm²
Weißgrad ISO 80, nach DIN EN ISO 2470

### Beispiel 3

Baumwollkämmlinge bleichen - Medzinische Watte Packdichte 300 g/l
1. kalt naß packen bei 30 °C
2. 40 Minuten kalt bei 30 °C, NaOH 5,5 ml/l 33%,
   Komplexbildner Securon 540 1,0 g/l,
   Entlüftungsmittel Arbyl SFR 1,2 g/l,
   Tensid Foryl JA 0,8 g/l,
3. aufheizen auf 110 °C,
4. Bleiche 30 Minuten 110 °C,
   Wasserstoffperoxid 9 g/l 50%,
   Stabilisator Stabilol HN 1,0 g/l,
5. ablassen
6. spülen bei 80 °C, 10 Minuten,
   Komplexbildner Securon 540 1,0 g/l,
7. Stufen 5. Und 6. wiederholen
8. ablassen
9. spülen bei 50 °C
10. Stufen 8. Und 9. wiederholen,
11. ablassen
12. spülen bei 40 °C
   0,2 ml/l Ameisensäure 85%
13. ablassen
14. spülen bei 30 °C
15. ablassen und abdrücken
10. auf Siebtrommeltrockner mit 130 °C auf 12% Restfeuchte trocknen

Weißgrad ISO 92, nach DIN EN ISO 2470

### Beispiel 4

Leinen Flocke beuchen - Trinatriumphosphatverfahren Na₃PO₄ Packdichte 350 g/l
1. kalt naß packen bei 20 °C
2. 60 Minutest kalt, Na₃PO₄ 8g/l,
   Tensid Securon 540 1,5 g/l,
3. ablassen ohne spülen
4. Beuche Start 45 °C, 30 Minuten 110 °C,
   Na₃PO₄ 8g/l,
   Tensid Securon 540 1,5 g/l,
5. ablassen und 2x warm spülen bei 50 °C,
6. ablassen und 2x kalt spülen bei 18 °C,
2. ablassen und abdrücken,
3. auf Siebbandtrockner mit 130° C trocknen auf 14% Restfeuchte

Faserfestigkeit E-Modul 12602 N/mm²

## Patentansprüche

1. Verfahren zur Herstellung eines Fasermaterial bei dem ein Naturfasermaterial alkalisch aufgeschlossen wird, **dadurch gekennzeichnet, dass** das Fasermaterial ohne Anwendung mechanischer Spannung mit alkalischem Material bei einer Konzentration von 5 bis 13 g/l
a) 10 Minuten bis 3 Stunden lang bei einer Temperatur von 5 bis 30 °C und anschließend
b) 20 Minuten bis 1,5 Stunden lang bei einer Temperatur von 80 bis 150 °C behandelt
und gegebenenfalls ausgewaschen und/oder getrocknet wird.

2. Verfahren nach Anspruch 1, **dadurch gekennzeichnet, dass** Naturfasermaterial ausgewählt ist aus a) Samenfasern, insbesondere Linters, Baumwolle, Kapok und Pappelflaum, b) Bastfasern, insbesondere Sklerenchymfasern, Bambusfasern, (Brenn)nessel, Hanf, Jute, Leinen bzw. Flachs, und Ramie, c) Hartfasern, insbesondere Sisal, Kenaf und Manila, d) Kokosfasern, und e) Gräsern.

3. Verfahren nach Anspruch 1 oder 2, **dadurch gekennzeichnet, dass** die Naturfasern ausgewählt sind aus cellulosischen Fasern, insbesondere Linters, Baumwolle, Bastfasern und Sklerenchymfasern, bevorzugt Flachs bzw. Leinen, Hanf, Nessel, Ramie, Kenaf und Jute, wobei Flachs bzw. Leinen oder Hanf besonders bevorzugt sind.

4. Verfahren nach Anspruch 1, 2 oder 3, **dadurch gekennzeichnet, dass** die Alkalien ausgewählt sind aus Alkalimetallhydroxid, insbesondere Natriumhydroxid und Kaliumhydroxid, Alkalimetallcarbonat, insbesondere Natriumcarbonat und Kaliumcarbonat, und Alkalimetallphosphate, insbesondere Trinatriumphosphat und Trikaliumphosphat, wobei Natriumhydroxid und Trinatriumphosphat bevorzugt sind.

5. Verfahren nach einem der vorhergehenden Ansprüche, **dadurch gekennzeichnet, dass** der pH-Wert bei der Behandlung gemäß a) und b) im Bereich von 8 bis 14, vorzugsweise 10 bis 14, bevorzugter 11 bis 12 liegt.

6. Verfahren nach einem der vorhergehenden Ansprüche, **dadurch gekennzeichnet, dass** die Konzentration an alkalischem Material in a) und/oder b), bezogen auf den Wirkstoff, im Bereich von 7 bis 13 g/l, bevorzugt 8 bis 12 g/l, besonders bevorzugt bei 10 g/l liegt.

7. Verfahren nach einem der vorhergehenden Ansprüche, **dadurch gekennzeichnet, dass** das Naturfasermaterial 15 Minuten bis 2 Stunden und bevorzugt 30 Minuten bis 1 Stunde lang gemäß a) behandelt wird.

8. Verfahren nach einem der vorhergehenden Ansprüche, **dadurch gekennzeichnet, dass** das Naturfasermaterial 30 Minuten bis 1 Stunde und bevorzugt 45 Minuten bis 1 Stunde lang gemäß b) behandelt wird.

9. Verfahren nach einem der vorhergehenden Ansprüche, **dadurch gekennzeichnet, dass** die Temperatur im Behandlungsschritt a) 10 bis 30 °C, bevorzugt 10 bis 25 °C, insbesondere 15 bis 25 °C, bevorzugter 15 bis 20 °C beträgt.

10. Verfahren nach einem der vorhergehenden Ansprüche, **dadurch gekennzeichnet, dass** die Temperatur im Behandlungsschritt b) 80 bis 140 °C, bevorzugt 85 bis 140 °C, insbesondere 90 bis 135 °C, bevorzugter 100 bis 135 °C beträgt.

11. Verfahren nach einem der vorhergehenden Ansprüche, **dadurch gekennzeichnet, dass** in a) und/oder b) außerdem gebleicht wird.

12. Verfahren nach einem der vorhergehenden Ansprüche, **dadurch gekennzeichnet, dass** als Bleichmittel H₂O₂, Chlor oder Ozon eingesetzt wird.

13. Verfahren nach einem der vorhergehenden Ansprüche, **dadurch gekennzeichnet, dass** die Naturfasern in Flocken-, Kammzug-, Vlies-, Garn- oder Gewebeform eingesetzt werden.

14. Verfahren nach einem der vorhergehenden Ansprüche, **dadurch gekennzeichnet, dass** während der Behandlung in a) und/oder b) zusätzlich Komplexbildner, Sequestriermittel und/oder Tensid und/oder Schaumunterdrücker eingesetzt wird/werden.

15. Fasermaterial, das nach dem Verfahren gemäß einem der Ansprüche 1 bis 14 herstellbar ist, mit einer durchschnittlichen Festigkeit (E-Modul), gemessen gemäß DIN EN ISO 5079 in N/mm², von 8000 bis 60000 N/mm².

16. Fasermaterial nach Anspruch 15 mit einer durchschnittlichen Festigkeit (E-Modul), gemessen in N/mm², 8000 bis 50000, bevorzugter 8000 bis 40000, noch bevorzugter 8000 bis 20000 und spezieller 8000 bis 15000 N/mm².

17. Fasermaterial nach Anspruch 15 oder 16, **dadurch gekennzeichnet, dass** es einen Abrieb I (Pilling), gemessen gemäß DIN/EN/ISO 12947-2, von 4 bis 8, insbesondere 4 bis 6, bevorzugt 4 bis 5, und/oder einen Abrieb II (Verschleiß), gemessen gemäß DIN/EN/ISO 12947-2, von 4 bis 8, insbesondere 4 bis 6, bevorzugt 4 bis 5 aufweist.

18. Fasermaterial nach Anspruch 15, 16 oder 17, **dadurch gekennzeichnet, dass** es sich bei den Fasern um Flachs bzw. Leinen handelt.

19. Verbundwerkstoff, der als eine Komponente ein Fasermaterial gemäß einem der Ansprüche 15 bis 18 enthält.

20. Verbundwerkstoff nach Anspruch 19, der neben dem Fasermaterial als weitere Komponente(n) Flammschutzmittel und/oder sonstige übliche Zusatzstoffe enthält.

21. Verwendung eines Fasermaterials gemäß einem der Ansprüche 15 bis 18 zur Herstellung eines Verbundwerkstoffs.

## Claims

1. Method for the production of a fibrous material in which a natural fibre material is solubilized in an alkaline manner, **characterized in that** the natural fibre material is treated with an alkaline material at a concentration of from 5 to 13 g/l without being subjected to mechanical stress
a) for 10 minutes to 3 hours at a temperature of between 5 and 30°C and then
b) for 20 minutes to 1.5 hours at a temperature of between 80 and 150°C,
and is then optionally washed and/or dried.

2. Method according to claim 1, **characterized in that** the natural fibre material is selected from a) seed fibres, in particular linters, cotton, kapok and poplar down, b) bast fibres, in particular sclerenchyma fibres, bamboo fibres, (stinging) nettles, hemp, jute, linen or flax, and ramie, c) hard fibres, in particular sisal, kenaf and manila, d) coir, and e) grasses.

3. Method according to claim 1 or 2, **characterized in that** the natural fibres are selected from cellulose fibres, in particular linters, cotton, bast fibres and sclerenchyma fibres, preferably flax or linen, hemp, nettles, ramie, kenaf and jute, wherein flax or linen or hemp are particularly preferred.

4. Method according to claim 1, 2 or 3, **characterized in that** the alkalis are selected from alkali metal hydroxide, in particular sodium hydroxide and potassium hydroxide, alkali metal carbonate, in particular sodium carbonate and potassium carbonate, and alkali metal phosphates, in particular trisodium phosphate and tripotassium phosphate, wherein sodium hydroxide and trisodium phosphate are preferred.

5. Method according to any of the preceeding claims, **characterized in that** the pH during the treatment according to a) and b) is in the range from 8 to 14, preferably 10 to 14, more preferably 11 to 12.

6. Method according to any of the preceeding claims, **characterized in that** the concentration of alkaline material in a) and/or b), based on the active ingredient, is in the range of from 7 to 13 g/l, preferably 8 to 12 g/l, particularly preferably at 10 g/l.

7. Method according to any of the preceeding claims, **characterized in that** the natural fibre material is treated for 15 minutes to 2 hours and preferably 30 minutes to 1 hour according to a).

8. Method according to any of the preceeding claims, **characterized in that** the natural fibre material is treated for 30 minutes to 1 hour and preferably 45 minutes to 1 hour according to b).

9. Method according to any of the preceeding claims, **characterized in that** the temperature in treatment step a) is between 10 and 30°C, preferably between 10 and 25°C, in particular between 15 and 25°C, more preferably between 15 and 20°C.

10. Method according to any of the preceeding claims, **characterized in that** the temperature in treatment step b) is between 80 and 140 °C, preferably between 85 and 140 °C, in particular between 90 and 135 °C, more preferably between 100 and 135 °C.

11. Method according to any of the preceeding claims, **characterized in that** bleaching also takes place in a) and/or b).

12. Method according to any of the preceeding claims, **characterized in that** H₂O₂, chlorine or ozone is used as bleaching agent.

13. Method according to any of the preceeding claims, **characterized in that** the natural fibres are used in flock, combed top, nonwoven, yarn or woven fabric form.

14. Method according to any of the preceeding claims, **characterized in that** during the treatment in a) and/or b), complexing agents, sequestering agents and/or surfactants and/or foam suppressors are additionally used.

15. Fibrous material which can be prepared according to a method of any of claims 1 to 15, having an average strength (elastic modulus), measured according to DIN EN ISO 5079 in N/mm², of 8 000 to 60 000 N/mm².

16. Fibrous material according to claim 15 having an average strength (elastic modulus) of 8 000 to 50 000, more preferably 8 000 to 40 000, even more preferably 8 000 to 20 000 and specially 8 000 to 15 000 N/mm².

17. Fibrous material according to claim 15 or 16, **characterized in that** it displays an abrasion I (pilling), measured according to DIN/EN/ISO 12947-2, of 4 to 8, in particular 4 to 6, preferably 4 to 5, and/or an abrasion II (wear), measured according to DIN/EN/ISO 12947-2, of 4 to 8, in particular 4 to 6, preferably 4 to 5.

18. Fibrous material according to claim 15, 16 or 17, **characterized in that** the fibres are flax or linen.

19. Composite material which contains, as a component, a fibrous material according to any of claims 15 to 18.

20. Composite material according to claim 19 which, in addition to the fibrous material, contains as further component(s) flame-proofing agents and/or other customary additives.

21. Use of a fibrous material according to any of claims 15 to 18 for the production of a composite material.

## Revendications

1. Procédé pour la fabrication d'un matériau en fibres dans lequel un matériau en fibres naturelles subit une attaque alcaline, **caractérisé en ce que** le matériau en fibres est traité sans recourir à une tension mécanique avec un matériau alcalin à une concentration de 5 à 13 g/l
a) pendant 10 minutes à 3 heures à une température de 5 à 30 °C, puis
b) pendant 20 minutes à 1,5 heure à une température de 80 à 150 °C,
et est ensuite, le cas échéant, lavé et/ou séché.

2. Procédé selon la revendication 1, **caractérisé en ce que** le matériau en fibres naturelles est choisi parmi a) les fibres de semences, en particulier les fibres courtes, le coton, le capoc et le duvet de peuplier, b) les fibres de liber, en particulier les fibres de sclérenchyme, les fibres de bambou, les orties, le chanvre, le jute, le lin et la ramie, c) les fibres dures, en particulier le sisal, le kenaf et le chanvre de Manille, d) les fibres de coco, et e) les herbes.

3. Procédé selon la revendication 1 ou 2, **caractérisé en ce que** les fibres naturelles sont choisies parmi les fibres cellulosiques, en particulier les fibres courtes, le coton, les fibres de liber et les fibres de sclérenchyme, de préférence le lin, le chanvre, l'ortie, la ramie, le kenaf et le jute, dans lequel le lin ou le chanvre sont particulièrement préférés.

4. Procédé selon la revendication 1, 2 ou 3, **caractérisé en ce que** les alcalis sont choisis parmi les hydroxydes de métal alcalin, en particulier l'hydroxyde de sodium et l'hydroxyde de potassium, les carbonates de métal alcalin, en particulier le carbonate de sodium et le carbonate de potassium, et les phosphates de métal alcalin, en particulier le phosphate trisodique et le phosphate tripotassique, dans lequel l'hydroxyde de sodium et le phosphate tripotassique sont préférés.

5. Procédé selon l'une quelconque des revendications précédentes, **caractérisé en ce que** lors du traitement conforme à a) et b), la valeur du pH se situe dans une plage de 8 à 14, de préférence de 10 à 14, de façon davantage préférée de 11 à 12.

6. Procédé selon l'une quelconque des revendications précédentes, **caractérisé en ce que** la concentration en matériau alcalin dans a) et/ou b), rapportée au principe actif, se situe dans la plage de 7 à 13 g/l, de préférence de 8 à 12 g/l, de façon particulièrement préférée à 10 g/l.

7. Procédé selon l'une quelconque des revendications précédentes, **caractérisé en ce que** le matériau en fibres naturelles est traité pendant 15 minutes à 2 heures et de préférence pendant 30 minutes à 1 heure conformément à a).

8. Procédé selon l'une quelconque des revendications précédentes, **caractérisé en ce que** le matériau en fibres naturelles est traité conformément à b) pendant 30 minutes à 1 heure et de préférence pendant 45 minutes à 1 heure.

9. Procédé selon l'une quelconque des revendications précédentes, **caractérisé en ce que** dans l'étape de traitement a), la température est de 10 à 30 °C, de préférence de 10 à 25 °C, en particulier de 15 à 25 °C, de façon davantage préférée de 15 à 20 °C.

10. Procédé selon l'une quelconque des revendications précédentes, **caractérisé en ce que** dans l'étape de traitement b), la température est de 80 à 140 °C, de préférence de 85 à 140 °C, en particulier de 90 à 135 °C, de façon davantage préférée de 100 à 135 °C.

11. Procédé selon l'une quelconque des revendications précédentes, **caractérisé en ce que** dans a) et/ou b) s'effectue en outre un blanchiment.

12. Procédé selon l'une quelconque des revendications précédentes, **caractérisé en ce que** comme agent de blanchiment sont utilisés le H₂O₂, le chlore ou l'ozone.

13. Procédé selon l'une quelconque des revendications précédentes, **caractérisé en ce que** les fibres naturelles sont mises en oeuvre sous forme de flocons, de ruban peigné, de non-tissé, de fil ou de tissu.

14. Procédé selon l'une quelconque des revendications précédentes, **caractérisé en ce que** pendant le traitement dans a) et/ou b), sont en outre utilisés des complexants, des agents séquestrants et/ou des tensioactifs et/ou des suppresseurs de mousse.

15. Matériau en fibres pouvant être fabriqué d'après un procédé selon l'une quelconque des revendications 1 à 14, avec une résistance (module d'élasticité) moyenne, mesurée conformément à la norme DIN EN ISO 5079 en N/mm², de 8 000 à 60 000 N/mm².

16. Matériau en fibres selon la revendication 15, avec une résistance (module d'élasticité) moyenne, mesurée en N/mm², de 8 000 à 50 000, préférablement de 8 000 à 40 000, encore plus préférablement de 8 000 à 20 000 et plus spécialement de 8 000 à 15 000 N/mm².

17. Matériau en fibres selon la revendication 15 ou 16, **caractérisé en ce qu'**il présente une abrasion I (pilling), mesurée conformément à la norme DIN/EN/ISO 12947-2, de 4 à 8, en particulier de 4 à 6, de préférence de 4 à 5, et/ou une abrasion II (usure), mesurée conformément à la norme DIN/EN/ISO 12947-2, de 4 à 8, en particulier de 4 à 6, de préférence de 4 à 5.

18. Matériau en fibres selon la revendication 15, 16 ou 17, **caractérisé en ce que** les fibres sont du lin.

19. Matériau composite, contenant comme l'un des composants un matériau en fibres selon l'une quelconque des revendications 15 à 18.

20. Matériau composite selon la revendication 19 qui, outre le matériau en fibres, contient comme autre(s) composant(s) des agents ignifugeants et/ou d'autres additifs usuels.

21. Utilisation d'un matériau en fibres selon l'une quelconque des revendications 15 à 18 pour fabriquer un matériau composite.
